Europäisches Patentamt

European Patent Office

Office européen des brevets

(19)

(11) Veröffentlichungsnummer: **0 204 074 B1**

# EUROPÄISCHE PATENTSCHRIFT

(12)

(45) Veröffentlichungstag der Patentschrift: **13.11.91**

(51) Int. Cl.⁵: **B29C 65/00**, //B29K105:08

(21) Anmeldenummer: **86102762.1**

(22) Anmeldetag: **03.03.86**

(54) Verfahren zur Verbindung von Profilen.

(30) Priorität: **12.03.85 DE 3508644**

(43) Veröffentlichungstag der Anmeldung:
**10.12.86 Patentblatt 86/50**

(45) Bekanntmachung des Hinweises auf die
Patenterteilung:
**13.11.91 Patentblatt 91/46**

(84) Benannte Vertragsstaaten:
**AT CH DE FR GB IT LI NL SE**

(56) Entgegenhaltungen:
**DE-A- 3 238 266**
**GB-A- 2 162 791**
**US-A- 3 885 071**
**US-A- 4 015 035**

**COMPOSITES, Band 11, Nr. 1, Januar 1980,
Seiten 46-50, Heath Sussex, GB; M.D.
WRIGHT: "Stress distribution in carbon fibrereinforced plastic joints"**

**PATENT ABSTRACTS OF JAPAN, Band 8, Nr.
216 (M-329)[1653], 3. Oktober 1984; & JP-A-59
101 325 (TAKEROU MOURI) 11-06-1984**

(73) Patentinhaber: **BAYER AG**

**W-5090 Leverkusen 1 Bayerwerk(DE)**

(72) Erfinder: **Born, Eberhard, Dipl.-Ing.**
**Strundener Strasse 104**
**W-5000 Köln 80(DE)**
Erfinder: **Korber, Helmut, Dr.**
**In der Hildscheid 18**
**W-5068 Odenthal(DE)**
Erfinder: **Mersch, Josef**
**Walliser Weg 9**
**W-5000 Köln 80(DE)**

## Beschreibung

Die Erfindung betrifft ein Verfahren zum Verbinden von Profilen aus langfaserverstärkten Kunststoffen, wobei die Enden der Profile unter einem Winkel von 0,1 bis 3° angeschrägt werden und einige Faserenden von der Harzeinbettung befreit und die Enden der Profile mittels kalthärtender Harze unter Druck durch Wärmezufuhr verklebt werden.

Bekannt sind Verbindungen von glasfaserverstärkten Kunststoff (GFK)-Profilen, bei denen naß in naß mit heißaushärtbaren Klebern an der Klebestelle die noch nicht ausgehärteten heißhärtenden Harze der Kunststoffmatrix verbunden werden.

Der Nachteil dieses Verfahrens besteht darin, daß es nur während der eigentlichen Herstellung der Profile in der Fabrik ausgeführt werden kann. Endlose Profile sind wegen der Transportschwierigkeiten zum Einsatzort damit nicht herzustellen.

Weiterhin ist auch bekannt, GFK-Laminate mittels verzahnter Überlappung der Glasmatten- oder -gewebeeinlagen zu verbinden.

Dieses Verfahren ist sehr umständlich, insbesondere wenn es sich um kleine Profile und/oder ungeeignete (z.B. runde) Formen handelt, Außerdem fällt die Festigkeit, wenn der ursprüngliche Querschnitt beibehalten wird, stark ab.

Aus US-A-3 885 071 und US-A-4 015 035 ist es bekannt, flache langfaserverstärkte Kunststoffprofile dadurch zu verbinden, daß man die Profilenden unter einem Winkel von etwa 4° anfast, die Faserenden freilegt und die Profilenden miteinander unter Anwendung von Wärme und Druck verklebt.

Schließlich ist es aus JP-A-59 101 325 bekannt, gebrochene stabförmige Körper mittels einer wärmeschrumpffähigen Vinylrohrhülse, welche innen ein zylindrisches Metallblech aufweist, zu verbinden.

Aufgabe der Erfindung ist es, ein Verfahren zum Verbinden von mit langen, insbesondere unidirektionalen Fasern verstärkten Kunststoffprofilen zu finden, mit welchem unter Beibehaltung des Querschnitts eine Festigkeit etwa gleich der ungeschwächten Profile erreicht wird und das auch auf der Baustelle anwendbar ist.

Diese Aufgabe wird dadurch gelöst, daß die Faserenden über eine Länge von 1 bis 30 mm freigelegt werden und daß zum Ausrichten der Profilenden ein Schlauch oder eine Wicklung aus Bändern oder Fäden aus wärmeschrumpffähigen Materialien um die zusammengefügten Profilenden gelegt wird und durch Wärmezufuhr geschrumpft wird.

Für den Fachmann ist überraschend, daß auch Profile mit größerem Anteil an unidirektionalen Fasern ohne wesentliche Einbußen an Zug- und Biegefestigkeit bei gleichbleibendem Querschnitt entgegen der landläufigen Meinung verbunden werden können, die bisher davon ausging, daß eine zuverlässige Kraftübertragung nur bei Querpressung möglich ist. Auch kleine runde Querschnitte mit einem Radius bis zu 1,5 mm, wie sie häufig beim Einsatz von Polystal® - einem Kunststoff mit unidirektionalen Fasern - üblich sind, können damit sicher verbunden werden. Beim Abtragen durch Schleifen werden mindestens einige Fasern über eine Länge von 1 bis 30 mm, insbesondere von 2 bis 12 mm, von der umgebenden Harzeinbettung befreit,

Durch ein umlaufendes Schleifband - leicht geneigt zur Längsrichtung - kann die Kunststoffmatrix zwischen den Langfasern, insbesondere bei unidirektional gerichteten Endlos-Fasern, entfernt werden. Die aus den abgeschrägten Flächen des runden Kunststoff-Profils herausragenden, stehengebliebenen Fasern, deren Anteil mindestens 30 %, besser 50 %, der ursprünglichen Einlagen betragen sollte, sorgen für einen sicheren Verbund an der Klebestelle.

Die Verklebung wird beispielsweise durch kalthärtende Harze unter Zuführung von Wärme vorgenommen.

Durch Zufuhr von Wärme wird die Aushärtung an der Baustelle beschleunigt, wobei sich besonders als geeignet kalthärtende Epoxidharze (wie Araldit® AW 134 mit HY 994, Lekutherm® 571 bzw. 20 mit T3) und kalthärtende Polyurethanharze (wie Baygal K55 und Baymidur K88) herausgestellt haben.

Das Überziehen eines dünnen Schlauches aus schrumpffähigem Material über die Profilenden ist sehr einfach. Durch die auch zum Härten benötigte Wärme schrumpft dieser und richtet die Enden selbsttätig aus. Gleichzeitig erzeugt der geschrumpfte Schlauch den notwendigen Druck zum Herauspressen von überschüssigem Harz aus der Fuge, um dann beide Enden sicher in der Klebeposition bis zum Aushärten zu fixieren. Der gleiche Effekt kann auch durch Umwicklung der Klebestelle mit einem dünnen warmschrumpfenden Polyester- oder Polyamidfaden bzw. -bändchen erreicht werden.

Nach Beendigung des Vorganges kann der Schlauch leicht abgezogen werden oder als Schutz dort verbleiben, wenn auch die Profile mit einem Schutzmantel überzogen sind.

Bei der kraftschlüssigen Verbindung von Kunststoffstäben nach dem vorgenannten Verfahren sind die unter einem Winkel von 0,1 - 3° zur Längsachse abgeschrägten Enden der Profile jeweils mit ihren auf Stärke Null auslaufenden Enden entgegengesetzt flüchtend so zusammengesetzt, daß der ursprüngliche Querschnitt in etwa beibehalten wird.

Durch diese Konstruktion ist es möglich, beispielsweise hochfeste, biegsame runde Kunststoffstäbe mit Einlagen aus vielen durchgehenden Glasfasern in mindestens einer außenliegenden Glasfaserverwicklung, die unter dem Namen Polystal® bekannt sind, ohne Querschnittsvergrößerung zu verbinden. Selbstverständlich können auch Langfasern aus Kohle oder Aramid verwendet werden.

Durch herausragende Fasern, insbesondere von ursprünglich unidirektionalen Langglasfasern, wird die Klebung noch verbessert, so daß kaum Festigkeitseinbußen im Bereich der Verbindung vorhanden sind.

Gemäß einer Ausführungsform werden zwischen den Klebeflächen zusätzliche Verstärkungen angeordnet.

Durch Verstärkungen mit höherer Festigkeit als die Langfasern kann die Festigkeit günstig beeinflußt werden, da die eventuelle Schwächung hierdurch wieder ausgeglichen wird.

Beispiel

Die beiden zusammenzufügenden Enden eines Stabes aus Polystal® werden von der Trommel abgezogen und jeweils auf Anschlaglehren geklebt, die dann an beiden Längs-seiten eines umlaufenden Schleifbandes mit einer Körnung zwischen 80 und 120 auf Schlitten so angeordnet werden, daß die Längsachse der Stäbe zur Laufrichtung einen Winkel von 0,33° bilden.

Beide Enden werden durch Bewegen der Schlitten gleichzeitig geschliffen, wobei das Schleifband in Richtung der abnehmenden Stärke der Stäbe läuft. Anschließend werden die Enden von der Anschlaglehre gelöst und mit Aceton vom Staub befreit. Ein Schlauch und drei Schlauchlaschen aus schrumpfbarer Folie, auf die innen ein Polytetrafluorethylen aufgesprüht ist, werden auf den Stab geschoben. Nach dem Auftragen von kalthärtendem Epoxidharz mit dem Pinsel werden beide Enden deckungsgleich übereinandergelegt und mit den aufgeschobenen und dann durch Wärme geschrumpften Laschen positioniert. Anschließend wird der Schlauch über die Verbindung geschoben und so geschrumpft, daß überschüssiges Harz in einer Richtung vor dem Schrumpfvorgang entweichen kann. Nach Abschluß dieses Vorganges sind die Enden zentriert und zusammengepreßt, denn der ursprüngliche Durchmesser des Schlauches schrumpft bei einer Temperatur zwischen 120 und 200° auf die Hälfte zusammen.

Nach dem beschleunigten Aushärten des Epoxidharzes durch Wärmezufuhr werden der Schlauch und die Schlauchlaschen abgezogen.

Der oben beschriebene Ablauf ist für folgende Profile in gleicher Weise durchgeführt worden

| | | Schäftungswinkel | Schäftungslänge |
|---|---|---|---|
| V 24 | Ø 1,35 mm | 0,33 | 236 mm |
| V 30 | Ø 1,51 mm | 0,33 | 264 mm |
| V 36 | Ø 1,65 mm | 0,33 | 288 mm |
| V 48 | Ø 1,91 mm | 0,33 | 350 mm |

Bei der Zugprüfung der geschäfteten Proben wurden Reißkräfte ermittelt, die zwischen 85 % und 95 % der Originalstäbe erreichen.

Diese Verbindungtechnik ist besonders für die Kabelindustrie wichtig. Dort werden GFK-Profile als Stütz- und Zugentlastungselemente in Lichtwellenleiterkabeln eingesetzt. Längere Kabel können nur gefertigt werden, wenn für die GFK-Profile eine Verbindungstechnik zur Verfügung steht, die möglichst auch direkt an der Kabelmaschine ausgeführt werden kann und zu keiner Verdickung führt.

Eine Verbindung von gleichen Stäben, die mit einer konventionellen abgesetzten, einschnittigen Überlappung ausgeführt wurden, erreichte lediglich 30 % der Reißkräfte der Originalstäbe.

**Patentansprüche**

1. Verfahren zum Verbinden von Profilen aus langfaserverstärkten Kunststoffen, wobei die Enden der Profile unter einem Winkel von 0,1 bis 3° angeschrägt werden und einige Faserenden von der Harzeinbettung befreit und die Enden der Profile mittels kalthärtender Harze unter Druck durch

3

Wärmezufuhr verklebt werden, dadurch gekennzeichnet, daß die Faserenden über eine Länge von 1 bis 30 mm freigelegt werden und daß zum Ausrichten der Profilenden ein Schlauch oder eine Wicklung aus Bändern oder Fäden aus wärmeschrumpffähigen Materialien um die zusammengefügten Profilenden gelegt wird und durch Wärmezufuhr geschrumpft wird.

2. Verfahren nach Anspruch 1, dadurch gekennzeichnet, daß zwischen den Klebeflächen zusätzliche Verstärkungen angeordnet werden.

## Claims

1. A method for joining profiles of long-fibre-reinforced plastics, the ends of the profiles being bevelled at an angle of 0.1 to 3° and some fibre ends being freed from the resin encapsulation and the ends of the profiles being bonded with cold-cure resins by application of heat and pressure, characterized in that the fibre ends are exposed over a length of 1 to 30 mm and in that, to align the profile ends, a tube or a coil of ribbons or filaments of heat-shrinkable materials is placed around the profile ends after they have been fitted together and is shrunk by application of heat.

2. A process as claimed in claim 1, characterized in that additional reinforcements are arranged between the surfaces to be bonded.

## Revendications

1. Procédé de liaison de profilés de matières plastiques armées de fibres longues, les extrémités des profilés étant biseautées sous un angle de 0,1 à 3° et quelques extrémités de fibres étant dégagées de l'enrobage de résine, puis les extrémités des profilés étant collées les unes aux autres au moyen de résines durcissant à froid, sous pression et par apport de chaleur, caractérisé en ce que les extrémités des fibres sont dégagées sur une longueur de 1 à 30 mm et en ce que pour dresser les extrémités des profilés, un tuyau ou un enroulement de rubans ou de fils de matières rétrécissant à chaud est placé autour des extrémités des profilés à assembler, puis subit un rétrécissement par apport de chaleur.

2. Procédé selon la revendication 1, caractérisé en ce que des renforts supplémentaires sont disposés entre les surfaces de collage.